# EUROPEAN PATENT APPLICATION

(11) **EP 4 617 742 A1**
(43) Date of publication of application: **17.09.2025**
(21) Application number: 23914889.3
(22) Date of filing: 29.08.2023
(51) Int. Cl.: G02B 6/255

(54) **FUSION SPLICER HAVING CABLE GUIDE**

(30) Priority: 03.01.2023 KR 20230000517
(71) Applicant: UCLSwift Co.,Ltd., Daejeon 34015 (KR)
(72) Inventor: JUN, Kun-Ik, Hamyang-gun Gyeongsangnam-do 50003 (KR); JUN, Sang-Chul, Okcheon-gun Chungcheongbuk-do 29045 (KR)
(74) Representative: BCKIP Part mbB
(86) International application number: PCT/KR2023/012763
(87) International publication number: WO 2024/147424

(57) **Abstract**

The present disclosure relates to a fusion splicer having a cable guide, and more specifically, to a fusion splicer having a cable guide that allows fusion to be stable, in which the cable guide is detachably and horizontally installed on a side surface of the fusion splicer to allow the cut surface of an optical fiber to be fixed horizontally in its position so as to prevent the occurrence of a problem that a cable, one end of which is placed on an optical fiber fixing unit, sags or bends in the lengthwise direction thereof to cause the cut surface of the optical fiber to be lifted up from the optical fiber fixing unit and thus cause a fusion process to be suspended.

## Description

### [Technical Field]

The present disclosure relates to a fusion splicer having a cable guide, in which the cable guide is detachably used with respect to the fusion splicer to support a cable as a fusion target so as not to sag or bend.

### [Background Art]

In general, a portable optical fiber fusion splicer includes, a body that has installed thereon a handle for easy movement, a fusion-splicing part that is disposed on the body to fusion-splice the ends of two optical fibers to each other, and a heating part that shrinks a heat-shrinkable sleeve on a fusion-spliced portion of the optical fibers spliced at the fusion-splicing part. In general, a control part for operating the optical fiber fusion splicer is installed on the upper surface of the body, a monitor for monitoring and checking a situation inside the fusion-splicing part is installed on one side of the body, a plurality of ports, such as a USB port and a power port, are installed on the other side of the body, and a rechargeable battery is built in the body for outdoor use.

In the case of such an existing fusion splicer, there is a problem that the alignment and fusion splicing of optical fibers are difficult due to sagging or bending of optical cables with thick outer diameters as fusion targets and the ends of the optical cables are not horizontally disposed but are lifted up, making stable fusion difficult.

### [Citation List]

### [Patent Literature]

### [Patent Literature 1]

Korean Laid-Open Patent Publication No. 10-2008-0112895 (published on December 26, 2008)

### [Summary of Invention]

### [Technical Problem]

The present disclosure has been made in an effort to solve the above problems, and an object of the present disclosure is to provide a fusion splicer used to fuse optical fibers, the fusion splicer having a cable guide detachably installed on a side of the fusion splicer in a form extending from an optical fiber fixing unit of the fusion splicer to solve a problem that, when one end of a portion to be fused of an optical cable with a thick outer diameter for fusion is placed on the optical fiber fixing unit of the fusion splicer, the cable sags or bends downward perpendicularly to the lengthwise direction thereof and thus the one end of the portion to be fused of the cable is not accurately placed on the optical fiber fixing unit. That is to say, an object of the present disclosure is to provide a fusion splicer having installed thereon a cable guide that ensures stable disposition of a thick cable to prevent the occurrence of a problem that a fusion process is suspended due to lifting of the cable.

Other objects and advantages of the present disclosure will be described hereinafter and will be known through embodiments of the present disclosure. Furthermore, the objects and advantages of the present disclosure can be realized by the means and combinations described in the claims.

### [Solution to Problem]

The present disclosure has been made in an effort to solve the above problems, and
provides a cable guide 20 used in a field fusion splicer 100 for fusing optical fibers,
the cable guide 20 being detachably installed on a side surface of the fusion splicer 100 to correspond to an optical fiber fixing unit 10 of the fusion splicer 100 and being disposed on the same horizontal line as the optical fiber fixing unit 10 to be spaced from the ground, so that an optical cable A as a fusion target is supported so as not to sag or bend and a portion to be fused of the optical cable A is horizontally and correspondingly placed on the optical fiber fixing unit 10, thereby enabling stable fusion to proceed.

### [Advantageous Effects of Invention]

As described above, according to the present disclosure, effects are provided in that a thick optical cable may be stably placed horizontally on a fusing part of a fusion splicer without sagging or bending, thereby enabling stable fusion to be proceed.

In addition, according to the present disclosure, effects are provided in that, because a cable guide has a structure capable of being attached to and detached from the fusion splicer, installation and storage of the cable guide are easy.

### [Brief Description of Drawings]

FIG. 1, FIG. 4 and FIG. 5 illustrate an embodiment in which a fusion splicer having a cable guide according to the present disclosure is used.
FIG. 2 illustrate an embodiment showing a detachable structure for installing the cable guide according to the present disclosure on the fusion splicer.
FIG. 3 illustrate an embodiment showing the installation of the cable guide according to the present disclosure on the fusion splicer.
FIG. 6 illustrate an embodiment showing that two cable guides according to the present disclosure may be used in the fusion splicer.

### [Reference Signs List]

- 10:: Optical fiber fixing unit
- 11:: Cable guide fixing unit
- 20:: Cable guide
- 21:: Base
- 22:: Projecting part
- 23:: Mounting line
- 24:: Locking part
- 25:: Fastening part
- 26:: Cover
- 27:: Magnet
- 28:: Through part
- 30:: Stripper
- 40:: Washing unit
- 50:: Cutter
- 60:: Heating unit
- 100:: Fusion splicer

### [Description of Embodiments]

Before the various embodiments of the present disclosure are explained in detail, it is to be understood that the present disclosure is not limited in its application to the details of construction and the arrangements of components set forth in the following description or illustrated in the drawings. The present disclosure is capable of other embodiments and of being practiced or of being carried out in various ways. Also, it is to be understood that phraseology and terminology used herein with reference to device or element orientation (such as, for example, terms like "front," "back," "up," "down," "top," "bottom," "left," "right," "lateral," and the like) are only used to simplify description of the present disclosure, and do not alone indicate or imply that the device or element referred to must have a particular orientation. In addition, terms such as "first" and "second" are used herein and in the appended claims for purposes of description and are not intended to indicate or imply relative importance or significance.

To achieve the above object, the present disclosure has the following features.

Hereinafter, a preferred embodiment of the present disclosure will be described in detail with reference to the attached drawings. Prior to this, the terms or words used in the present specification and the claims should not be interpreted as being limited to their usual or dictionary meanings, and should be interpreted as meanings and concepts that conform to the technical idea of the present disclosure on the basis of the principle that the inventor(s) of the present disclosure can appropriately define the concepts of terms or words in order to explain his or her own invention in the best way.

Therefore, the embodiments described in the present specification and the configurations illustrated in the drawings are only the most preferred embodiments of the present disclosure and do not represent all of the technical ideas of the present disclosure. Therefore, it should be understood that there may be various equivalents and modified examples that can replace them at the time of filing the present application.

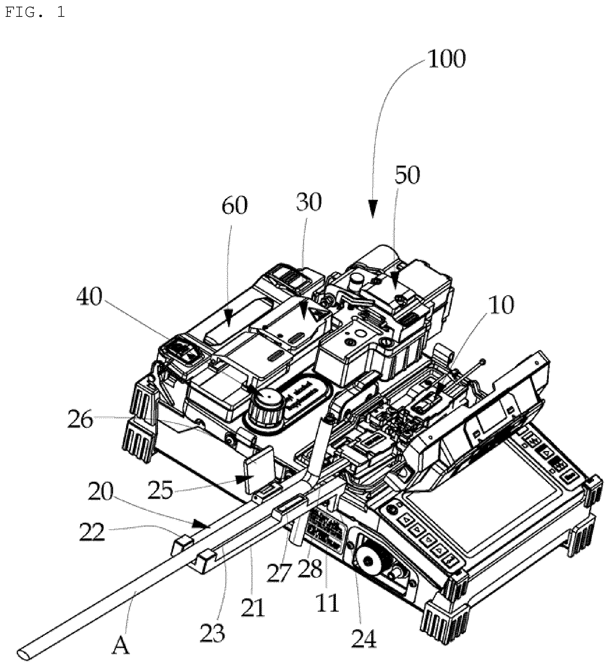

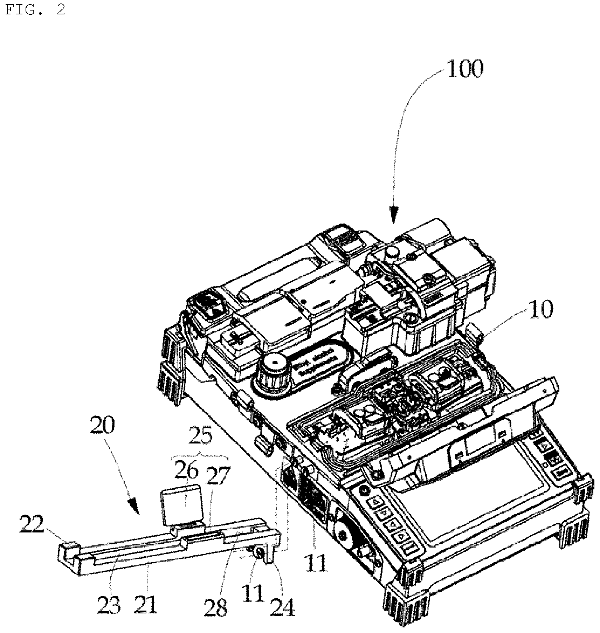

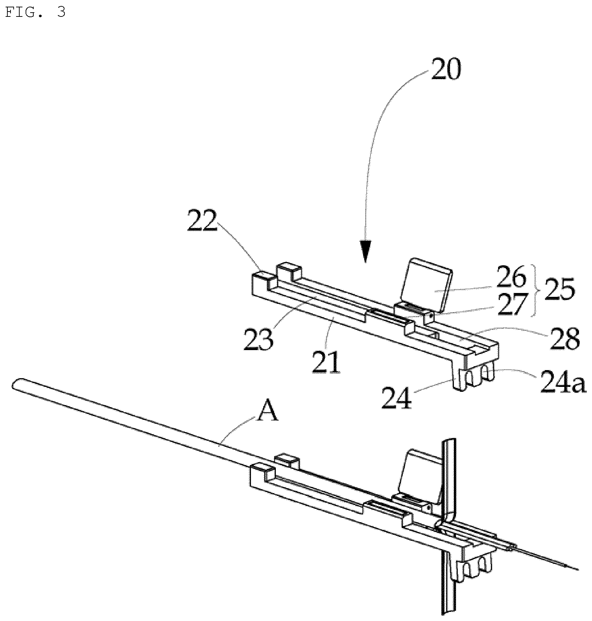

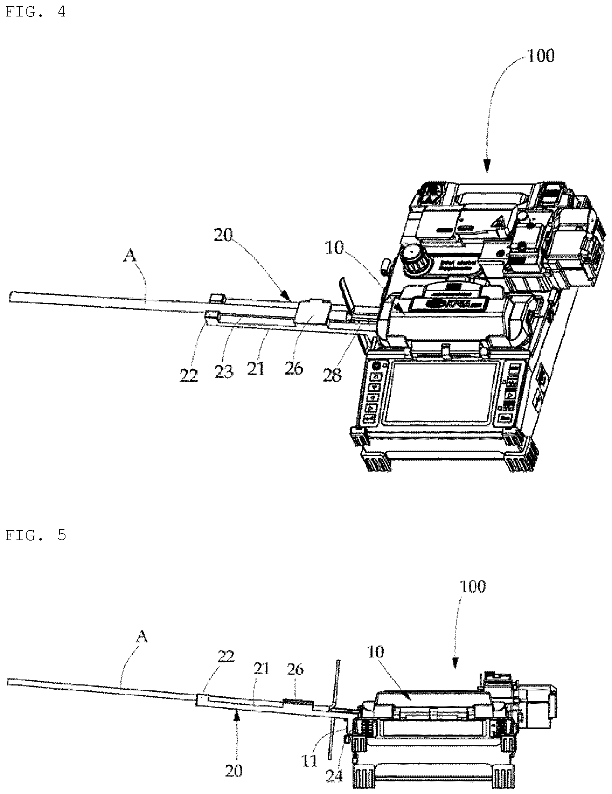

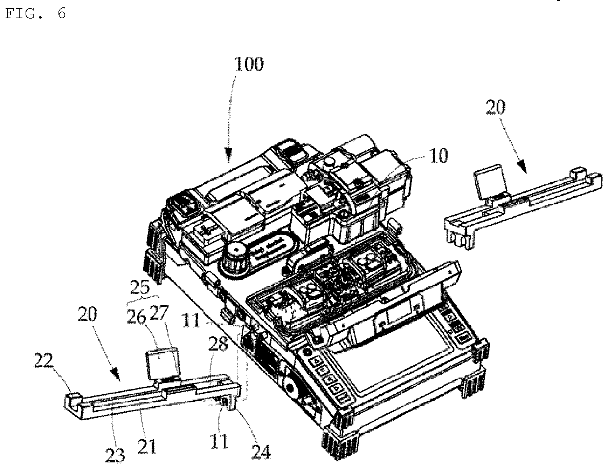

Hereinafter, a fusion splicer having a cable guide according to a preferred embodiment of the present disclosure will be described in detail with reference to FIG. 1 to FIG. 6.

A cable guide 20 according to the present disclosure is used in a field €fusion splicer 100 for fusing optical fibers. The cable guide 20 being detachably installed on a side surface of the fusion splicer 100 to correspond to an optical fiber fixing unit 10 of the fusion splicer 100 and being disposed on the same horizontal line as the optical fiber fixing unit 10 to be spaced from the ground, so that an optical cable A as a fusion target is supported so as not to sag or bend and a portion to be fused of the optical cable A is horizontally and correspondingly placed on the optical fiber fixing unit 10, thereby enabling stable fusion to proceed.

The detailed structure of the cable guide 20 for this is as follows.

The cable guide 20 includes a base 21, a mounting line 23, a locking part 24, a fastening part 25, and a through part 28.

The base 21 is a straight body that is disposed in such a way to extend in the lengthwise direction of the optical fiber fixing unit 10 from one side of the fusion splicer 100. In the present disclosure, the base 21 is formed to have a quadrangular cross-section, but the cross-sectional shape of the base 21 may be changed in various ways.

The mounting line 23 is a groove that is formed in the longitudinal direction of the base 21 on the upper surface of the base 21 so that the optical cable A is received in the groove. A projecting part 22 is formed at one end of the mounting line 23 of the base 21 so that both sides of the mounting line 23 project upward to prevent the optical cable A from being released.

The locking part 24 is a part that is formed by being bent downward at the front end of the base 21 and is detachably fitted into a cable guide fixing unit 11 that is formed to project on a side surface in the lengthwise direction of the optical fiber fixing unit 10. The cable guide fixing unit 11 is formed by two bolt-shaped projections, and the locking part 24 is composed of two corresponding grooves 24a into which the projections may be fitted to prevent the cable guide 20 from being released forward.

Of course, so long as the base 21 may be attached to and detached from one side of the fusion splicer 100, a detachable structure may be changed according to various user embodiments.

The fastening part 25 is a part that presses the optical cable A in a widthwise direction against movement so that the optical cable A located in the mounting line 23 is prevented from being lifted from the upper surface of the base 21. The fastening part 25 is composed of a cover 26 that rotates with a hinge on one side of the upper surface of the base 21 and a magnet 27 that corresponds to the cover 26 on the other side of the upper surface of the base 21, so that the cover 26 sticks to the magnet 27 to fix the optical cable A. The fastening part 25 is formed to have a shape that projects more upward than the mounting line 23 on the upper surface of the base 21, so that the optical cable A is prevented from being released due to the height of the fastening part 25.

The through part 28 is a hole that is formed in upward and downward directions to pass through the front portion of the base 21 so that stripped outer sheath portions of the optical cable A may be exposed by being spread outward in the upward and downward directions of the base 21.

In the case of the cable guide 20 having the above-described configuration, two cable guides 20 may be used simultaneously so that the two cable guides 20 are detachably installed on both sides, respectively, of the fusion splicer 100 to support both optical cables A as fusion targets, or only one cable guide 20 may be used selectively.

In addition, in order to ensure stable entry of the optical cable A, the cable guide 20 may be configured such that the mounting line 23 on the side of the locking part 24 is lower than the mounting line 23 on the side of the projecting part 22.

In addition, in the case of the fusion splicer 100 on which the cable guide 20 is installed, a stripper 30 capable of stripping the outer sheath of the end of the optical cable A as a fusion target; a washing unit 40 having an alcohol container for washing the stripped portion of the optical cable A; a cutter 50 capable of cutting the stripped outer sheath portions of the optical cable A; and a heating unit 60 that wraps a fused area with a heat-shrinkable sleeve and heats the heat-shrinkable sleeve with a heater to protect the fused area after a fusion process for two optical cables A as fusion targets is completed through the optical fiber fixing unit 10 are installed on the upper surface of the fusion splicer 100, so that all of the processes of stripping, washing, cutting, fusing and heating the optical cable A may be performed on site through the single fusion splicer 100.

As described above, although the present disclosure has been described by means of limited embodiments and drawings, the present disclosure is not limited thereto, and various modifications and changes are possible by a person skilled in the art to which the present disclosure pertains within the technical spirit of the present disclosure and the scope of equivalents of the patent claims to be described below.

## Claims

1. A field fusion splicer 100 for fusing optical fibers, comprising a cable guide 20 installed thereon,
wherein the cable guide 20 is detachably installed on a side surface of the fusion splicer 100 to correspond to an optical fiber fixing unit 10 of the fusion splicer 100 and is disposed on the same horizontal line as the optical fiber fixing unit 10 to be spaced apart from the ground, so that an optical cable A as a fusion target is supported so as not to sag or bend and a cut surface of an optical fiber is horizontally and correspondingly placed on the optical fiber fixing unit 10, thereby enabling stable fusion to proceed.

2. The fusion splicer according to claim 1, wherein the cable guide 20 comprises:
a straight base 21 disposed in such a way to extend in the lengthwise direction of the optical fiber fixing unit 10 from one side of the fusion splicer 100;
a mounting line 23 forming a groove in the longitudinal direction of the base 21 on the upper surface of the base 21 so that the optical cable A is received in the groove; and
a locking part 24 formed by being bent downward at the front end of the base 21and detachably fitted into a cable guide fixing unit 11 that is formed to project on a side surface in the lengthwise direction of the optical fiber fixing unit 10

3. The fusion splicer according to claim 2, wherein the cable guide 20 further comprises:
a fastening part 25 pressing the optical cable A in a widthwise direction against movement so that the optical cable A located in the mounting line 23 is prevented from being lifted from the upper surface of the base 21; and
a through part 28 formed in upward and downward directions to pass through the front portion of the base 21 so that stripped outer sheath portions of the optical cable A are exposed by being spread outward in the upward and downward directions of the base 21.

4. The fusion splicer according to any one of claims 1 to 3, wherein two cable guides 20 are used simultaneously so that the two cable guides 20 are detachably installed on both sides, respectively, of the fusion splicer 100 to support both optical cables A as fusion targets, or only one cable guide 20 is used selectively.

5. The fusion splicer according to claim 1, wherein the fusion splicer 100 comprises, installed on the upper surface thereof:
a stripper 30 capable of stripping the outer sheath of the end of the optical cable A as a fusion target;
a washing unit 40 having an alcohol container for washing the stripped portion of the optical cable A;
a cutter 50 capable of cutting the stripped outer sheath portions of the optical cable A; and
a heating unit 60 wrapping a fused area with a heat-shrinkable sleeve and heating the heat-shrinkable sleeve with a heater to protect the fused area after a fusion process for two optical cables A as fusion targets is completed through the optical fiber fixing unit 10.

6. The fusion splicer according to any one of claims 1 to 5, wherein, in order to ensure stable entry of the optical cable A, the cable guide 20 is configured such that the mounting line 23 on the side of the locking part 24 is lower than the mounting line 23 on the side of the projecting part 22**.**

7. The fusion splicer according to claim 1, wherein the fusion splicer 100 comprises, installed on the upper surface thereof:
a heating unit 60 wrapping a fused area with a sleeve and heating the sleeve with a heater to protect the fused area after a fusion process for two optical cables A as fusion targets is completed through the optical fiber fixing unit 10.

8. The fusion splicer according to claim 1, wherein the fusion splicer 100 comprises, installed thereon: a stripper 30 capable of stripping an outer sheath.

9. The fusion splicer according to claim 1, wherein the fusion splicer 100 comprises, installed thereon:
a cutter 50 capable of cutting the stripped outer sheath portions of the optical cable A.

10. The fusion splicer according to claim 1 or 8, wherein the fusion splicer 100 comprises, installed thereon:
a washing unit 40 having an alcohol container for washing the stripped portion of the optical cable A.
